# FASCICULE DE BREVET EUROPEEN

(11) **EP 2 792 235 B1**
(45) Date de publication et mention de la délivrance du brevet: **07.12.2016**
(21) Numéro de dépôt: 14165327.9
(22) Date de dépôt: 18.04.2014
(51) Int. Cl.: A01K 39/012

(54) **Installation pour l'alimentation de volailles comprenant au moins une ligne d'alimentation incluant un tube convoyeur auquel sont fixées des mangeoires**
Anlage zum Füttern von Geflügel, die mindestens eine Futterlinie mit einem Förderrohr umfasst, an dem Futtertröge befestigt sind
Poultry-feeding plant comprising at least one supply line including a conveyor tube to which feeders are secured

(30) Priorité: 19.04.2013 FR 1353578
(43) Date de publication de la demande: 22.10.2014
(73) Titulaire: Etablissements Le Roy, 35530 Noyal-Sur-Vilaine (FR)
(72) Inventeur: Le Roy, Nicolas, 35200 RENNES (FR)
(74) Mandataire: Vidon Brevets & Stratégie

(56) Documents cités:
- WO-A1-00/49857
- US-A- 4 987 859
- US-A1- 2002 130 516
- US-A1- 2011 018 263

## Description

### 1. Domaine de l'invention

L'invention concerne le domaine de la conception et de la réalisation des installations pour l'alimentation des volailles destinées à équiper des bâtiments d'élevage.

Plus précisément, l'invention concerne une installation du type de celles comprenant au moins une ligne d'alimentation incluant un tube convoyeur auquel sont fixées des mangeoires et pouvant être relevée grâce à un système de câbles actionné par un treuil. En pratique ce système de câbles inclut un câble principal horizontal dont chacune des extrémités est reliée aux extrémités d'au moins un tube convoyeur et auquel sont fixés des câbles de suspension supportant ce tube convoyeur. L'actionnement du treuil déclenche l'enroulement ou le déroulement du câble principal et donc respectivement le relèvement ou l'abaissement du tube convoyeur supportant les mangeoires.

### 2. Art antérieur

Ces lignes d'alimentation, bien connues de l'art antérieur, incluent à leurs extrémités une trémie contenant de l'aliment et un moteur permettant de faire tourner une vis sans fin prévue à l'intérieur du tube convoyeur pour amener aux mangeoires les quantités d'aliment nécessaires. A cet effet les tubes convoyeurs sont percés d'orifice par lesquels l'aliment peut se déverser dans les mangeoires.

Ces lignes d'alimentation peuvent être plus ou moins relevées en fonction du type de volailles élevées ou de leur âge. Ainsi pour des volailles de petites tailles, telles que par exemple des poussins, les lignes d'alimentation sont abaissées de façon telle que les mangeoires reposent au sol. Lorsque les volailles grandissent, les lignes d'alimentation et donc les mangeoires sont relevées au fur et à mesure de la croissance de celles-ci de façon à correspondre au mieux à leur comportement alimentaire et ainsi participer au gain de productivité de l'élevage. En général, les mangeoires ne sont pas fixes par rapport au tube convoyeur mais peuvent se balancer légèrement sur celui-ci de façon à faciliter les opérations de maintenance devant être effectuées dans les bâtiments d'élevage et la circulation des volailles. Toutefois, pour l'élevage de coqs reproducteurs, les mangeoires doivent être fermement fixées au tube convoyeur de façon à empêcher les mouvements de balancement des mangeoires qui pourraient conduire au déversement de l'aliment hors de celles-ci sous l'effet des violents coup de becs qui caractérisent la façon de se nourrir de ce type de volailles.

L'amplitude d'élévation de telles lignes d'alimentation est généralement conçue pour pouvoir s'adapter à l'élevage de différents types de volailles (poulets, coqs, dindes). Il est en effet courant, notamment pour des raisons d'ordre sanitaire, d'alterner les types de volailles élevées dans un même bâtiment d'élevage. Cette amplitude est également conçue pour pouvoir relever les lignes d'alimentation à une hauteur suffisamment élevée dans le bâtiment pour permettre le passage d'engins motorisés dans celui-ci. De tels engins sont notamment utilisés pour le changement des litières.

Les tubes convoyeurs de ces lignes d'alimentation sont en pratique constitués par l'association de plusieurs portions de tube en métal, préférentiellement de l'acier galvanisé, reliés bout à bout ou encore coopérant entre eux par une liaison mâle femelle. Lorsque les portions de tubes sont reliées bout à bout, des raccords tubulaires généralement également en métal, par exemple en acier inoxydable, sont prévus au niveau de la jonction entre les portions de tubes. Lorsque ces portions de tubes coopèrent entre eux par une liaison mâle femelle, des colliers de serrage sont prévus au niveau de la jonction.

Un problème posé par ce type d'installation réside dans le fait que les portions de tube constituant le tube convoyeur peuvent tourner les unes par rapport aux autres sous l'effet de forces qui leurs sont transmises. Ceci est particulièrement observé avec certaines volailles telles que les coqs qui s'alimentent par de violents coups de bec créant des forces sur les mangeoires qui sont transmises aux portions de tube convoyeur associées auxquelles ces mangeoires sont fixées. Au bout d'un certain temps, au moins certaines des mangeoires de la ligne d'alimentation peuvent ainsi se retrouver plus ou moins inclinées. Une telle inclinaison peut conduire à une perte d'aliment et nécessiter l'intervention d'un opérateur visant à replacer les portions de tubes et les mangeoires associées dans le bon axe.

Par ailleurs, au moins à l'issue de chaque campagne d'élevage, c'est-à-dire en pratique deux à sept fois par an, les mangeoires doivent être nettoyées par lavage abondant à l'eau. Pour des raisons évidentes d'ergonomie, ce travail est préférentiellement effectué en relevant à une hauteur adéquate les lignes d'alimentation afin que les mangeoires puissent être nettoyées à l'aide d'un jet d'eau par un opérateur sans que celui ait à se baisser. Afin de nettoyer au mieux ces mangeoires, il est connu d'utiliser des moyens permettant, après avoir relevé une ligne d'alimentation, de faire tourner le tube convoyeur de celle-ci sur lui-même, cette rotation entraînant le pivotement de l'ensemble des mangeoires dans une position facilitant leur nettoyage, selon laquelle les assiettes des mangeoires se trouvent dans une position sensiblement perpendiculaire au sol. Dans cette position, l'intérieur de chaque assiette est exposé à l'opérateur et peut être facilement et efficacement nettoyé. Une telle position des mangeoires en position de nettoyage facilite également l'égouttage et le séchage de celles-ci. Une telle technique est notamment décrite dans WO-A-0049857.

Dans ce type d'installations, selon lesquelles une rotation du tube convoyeur est prévue, la force de rotation doit être transmise aux différentes portions de tube constituant le tube convoyeur de façon telle que toutes les mangeoires d'une ligne d'alimentation puissent être concomitamment placées en position de nettoyage. Or, ces portions de tubes, ou les raccords tubulaires prévus à leur jonction, sont habituellement en métal. La nature lisse des surfaces métalliques de ces éléments est peu propice à la transmission efficace de cette force de rotation au niveau de la jonction des portions de tube constituant le tube convoyeur. De plus, chaque portion de tube supporte plusieurs mangeoires dont le poids cumulé peut être relativement élevé. En pratique, on observe donc fréquemment une mauvaise transmission de la force de rotation appliquée au tube convoyeur au niveau de ces jonctions, certaines portions de tubes ne tournant alors pas avec les autres et les mangeoires associées ne se plaçant donc en conséquence pas dans la position de nettoyage. De plus, les mangeoires mises en position de nettoyage voient leur centre de gravité décalé par rapport à l'axe longitudinal du tube convoyeur. Leur poids fait qu'elles tendent à revenir dans une position gravitaire dans laquelle leur centre de gravité se situe dans le plan vertical passant par cet axe. La force de gravité qui s'exerce sur les mangeoires en position de nettoyage est donc contraire à la force de rotation appliquée au tube convoyeur. Si une mauvaise transmission de cette force de rotation est observée au niveau des jonctions des portions de tube, certaines mangeoires peuvent revenir dans leur position gravitaire ou dans une position proche de celle-ci. Plus les lignes d'alimentation sont longues, c'est-à-dire plus le nombre de portions de tube constituant leur tube convoyeur est élevé, plus le risque de survenue de ce problème est élevé.

Afin, de tenter de contrer ce problème, il a été proposé de doter les lignes d'alimentation de volailles dans lesquelles une rotation du tube convoyeur sur lui-même est prévue, d'un ensemble formant levier. Un tel ensemble formant levier comprend une prise de levier solidarisée fixement à une portion du tube convoyeur, un bras de levier dont une des extrémités est conçue pour être introduite dans cette prise de levier et dont l'autre extrémité est pourvue de moyens d'accrochage. En pratique, le treuil est actionné de façon à enrouler le câble principal pour relever le tube convoyeur de façon telle que les mangeoires soient au moins à hauteur d'homme, c'est-à-dire à une hauteur optimisée permettant leur nettoyage aisé par un opérateur. Ensuite, afin de placer les mangeoires en position de nettoyage, l'opérateur introduit l'extrémité du levier dans la prise de levier, actionne ce levier vers le haut pour faire pivoter le tube convoyeur sur lui-même et entraîner les mangeoires grâce à des butées prévues sur le tube convoyeur, puis accroche l'extrémité de ce bras de levier à un point d'un câble de suspension du tube convoyeur relié au câble principal. Ce point du câble de suspension en question est prévu à une distance du point d'accrochage de ce tube de suspension au tube convoyeur qui correspond à peu près à la longueur du bras de levier. Les mangeoires sont ainsi maintenues en position de nettoyage et l'opérateur peut procéder à celui-ci. Dans cette position de nettoyage, le bras de levier se trouve en position quasi verticale et exerce sur le tube convoyeur une force qui présente une composante s'opposant au retour en position gravitaire des mangeoires.

Un premier inconvénient des installations pourvues d'un tel ensemble formant levier résulte du fait que l'extrémité du bras de celui-ci doit être fixée à un point d'un câble de suspension du tube convoyeur pour maintenir les mangeoires en position de nettoyage. De ce fait, ce câble de suspension ploie sous l'effet du poids des mangeoires et du tube convoyeur. Pour compenser ce ploiement du câble de suspension et faire en sorte que les assiettes des mangeoires soient effectivement dans une position sensiblement perpendiculaire au sol dans la position de nettoyage des mangeoires lorsque le levier est accroché au câble de suspension, la force exercée sur ce bras de levier accroché au câble doit être supérieure à la force qui serait nécessaire au positionnement des mangeoires en position de nettoyage si ce câble ne ployait pas. La force supplémentaire nécessaire exercée sur le bras de levier concourre à favoriser la mauvaise transmission de la force de rotation de la portion de tube pourvue de la prise de levier au reste du tube convoyeur.

Un second inconvénient des installations de l'art antérieur pourvues d'un tel ensemble formant levier survient lorsque la ligne d'alimentation est installée dans un bâtiment bas de plafond, ce qui est fréquent dans certaines zones d'exploitation. Dans une telle configuration de bâtiment, lorsque la ligne d'alimentation est relevée à son maximum pour autoriser le passage des engins motorisées utilisés notamment pour le changement des litières, il n'est pas possible d'avoir préalablement positionnées les mangeoires en position de nettoyage à l'aide du levier, car celui-ci en position quasi verticale viendrait alors en butée contre le plafond du bâtiment.

C'est avec l'objectif de pallier ces inconvénients que la Demanderesse a déposé la demande française, déposée sous le numéro 1250385. Cette demande décrit une installation pour l'alimentation de volailles dans laquelle le bras de levier peut être solidarisé à une extrémité du câble de liaison lorsque les mangeoires sont placées en position de nettoyage. Des joints anti-rotation en polymère peuvent être prévus au niveau des portions de tubes formant le tube convoyeur. Toutefois, lorsque les forces exercées sur ces tubes sont trop fortes, ces joints ne suffisent plus à empêcher la rotation.

Il est donc nécessaire de prévoir un système anti-rotation plus performant, qui soit capable de résister à des contraintes plus élevées.

### 3. Objectifs de l'invention

L'invention a notamment pour objectif de palier ces inconvénients de l'art antérieur.

Plus précisément, un objectif de l'invention est de fournir une installation pour l'alimentation de volailles destinée à équiper un bâtiment d'élevage incluant au moins une ligne d'alimentation relevable grâce à un treuil, dans laquelle les différentes portions de tube constituant le tube convoyeur présente un risque minimisé de tourner les unes par rapport aux autres.

Egalement un objectif de l'invention est de fournir, dans au moins un mode de réalisation, une installation de ce type dans laquelle la mise en rotation du tube convoyeur sur lui-même implique un risque minimisé de voir les différentes portions de tube constituant le tube convoyeur tourner les unes par rapport aux autres.

Egalement un objectif de l'invention est de fournir, dans au moins un mode de réalisation, une telle installation qui soit simple à mettre en oeuvre.

Encore un objectif de l'invention est de fournir, dans au moins un mode de réalisation, une telle installation qui n'implique pas, à capacité constante, un surcoût de fabrication important par rapport aux installations de l'art antérieur.

### 4. Exposé de l'invention

Ces objectifs, ainsi que d'autres qui apparaîtront par la suite sont atteints grâce à l'invention qui concerne une installation pour l'alimentation de volailles destinée à équiper un bâtiment d'élevage incluant au moins une ligne d'alimentation relevable grâce à un treuil actionnant un câble principal auquel ladite ligne d'alimentation est reliée, ladite ligne d'alimentation comprenant une pluralité de mangeoires fixées à un tube convoyeur d'aliment et des moyens de distribution dudit aliment dans lesdites mangeoires, ledit tube convoyeur d'aliment étant relié audit câble principal par des câbles de suspension et étant composé d'une pluralité de portions de tube reliées les unes aux autres, ladite installation étant pourvue de moyens permettant la mise en rotation sur lui-même dudit tube convoyeur, ou d'une section de celui-ci, de façon à organiser le pivotement desdites mangeoires, lesdits moyens de mise en rotation comprennent au moins un ensemble formant levier incluant une barre de levier dont une extrémité est destinée à coopérer avec une prise de levier fixée audit tube convoyeur, et un câble de liaison relié à l'une de ses extrémités au câble principal et destiné à être relié par l'autre de ses extrémités à l'autre extrémité dudit bras de levier, ledit câble de liaison étant indépendant des câbles de suspension du tube convoyeur.

Selon l'invention, des encoches métalliques anti-rotations sont prévues au niveau des jonctions entre lesdites portions de tube. Ces encoches coopèrent ensemble pour former une liaison non flexible entre les portions de tube. Cette rigidité de la liaison, ou de l'articulation entre les portions de tubes, évite tout mouvement relatif entre elles.

La nature métallique de ces encoches renforce leur caractère rigide et solide. Cette rigidité leur permet notamment de s'opposer aux torsions et aux forces de rotation qui s'exercent sur les portions de tubes. Ainsi, les différentes portions de tube sont maintenues correctement alignées, sans possibilité de tourner les unes par rapport aux autres sous l'effet du poids des mangeoires ou celui des coups de bec.

Cette caractéristique permet donc de s'opposer à la gravité lorsque les mangeoires sont en position de nettoyage. Par conséquent, la force à exercer sur le bras de levier pour que les mangeoires restent parallèles au sol lorsqu'elles sont en position de nettoyage est limitée par rapport aux techniques de l'art antérieur.

De même, lorsque les mangeoires sont en position d'alimentation, les encoches permettent de résister plus aisément aux forces qui leur sont appliquées. Ainsi, lorsque les mangeoires sont bousculées par les volailles ou par les violents coups de bec des coqs, la rigidité de l'articulation entre les portions de tubes leur permet de maintenir les mangeoires perpendiculaires au sol. De cette façon, le gaspillage de nourriture est évitée, ou à tout le moins, grandement limitée.

Il est par ailleurs notable qu'aucune solution satisfaisante n'a été apportée à ce jour, bien que ce problème perdure depuis une quarantaine d'années.

Selon une variante avantageuse de l'invention, le levier est télescopique. En particulier, le levier télescopique peut être formé par le déploiement de barres articulées à leur extrémité, ce qui permet de réduire l'encombrement du levier qui reste fixé sur le tube convoyeur lorsqu'il n'est pas déployé.

Il pourra être envisagé de réaliser les encoches anti-rotation en différents matériaux métalliques.

D'une façon préférée, lesdites encoches anti-rotation sont constituées en un matériau choisi dans le groupe constitué par l'aluminium, l'acier inoxydable et l'acier galvanisé.

Ainsi, on pourra avantageusement utiliser des encoches facilement disponibles sur le marché ou que l'on puisse fabriquer sans difficulté particulière.

Avantageusement, lesdites portions de tube dudit tube convoyeur sont de même diamètre et sont reliées entre elles par des raccords tubulaires métalliques équipés de ladite encoche anti-rotation. Ainsi, le contact entre la surface intérieure métallique des raccords tubulaires et la surface métallique des portions de tube raccordées permet de guider et de maintenir les encoches. Corollairement, la rotation entre les portions de tube est également très fortement minimisée.

Dans une variante de l'invention, chacune desdites encoches présente une forme de demi-lune. Ainsi les encoches sont faciles à fabriquer et facile à monter. De plus, cette forme permet aux encoches de coopérer entre elles en s'emboitant.

Dans une autre variante, lesdits raccords tubulaires sont pourvus de fentes coopérant avec des ergots métalliques prévus sur les portions de tubes.

Dans une autre variante, lesdits raccords tubulaires sont pourvus d'ergots coopérant avec des encoches prévus sur les portions de tubes.

Encore dans une autre variante, lesdites portions de tubes sont pourvues d'encoches formant des fentes reliées par des éléments pourvus d'ergots.

Ces variantes de l'invention permettent également à deux portions de tube de coopérer sans permettre de rotation l'une par rapport à l'autre. Plus précisément, une portion de tube peut comprendre à sa surface un ergot. Cet ergot est destiné à coopérer avec une fente, présente sur l'autre portion de tube. L'ergot introduit dans la fente permet de bloquer tout mouvement relatif entre les portions de tube. La largeur de la fente doit être suffisamment large pour permettre l'insertion de l'ergot mais suffisamment étroite pour éviter que les portions de tubes puissent tourner l'une par rapport à l'autre. Un moyen de fixation externe tel qu'un collier de serrage peut renforcer la coopération et le maintien des portions de tube l'une avec l'autre.

De préférence, lesdites encoches métalliques anti-rotation sont prévues à l'extrémité de chacune des portions de tube.

On notera que l'on pourra prévoir, notamment dans les installations présentant des lignes d'alimentation particulièrement longues, et donc particulièrement lourdes, plusieurs ensembles formant leviers répartis sur la longueur de telles lignes, chaque ensemble formant levier étant alors dédié à la rotation d'une section seulement dudit tube convoyeur, chaque section incluant plusieurs portions de tube. L'actionnement des leviers de chacun de ces ensembles requerra alors que les différentes sections de tubes puissent être mises en rotation indépendamment les unes des autres.

Dans ce cadre, les jonctions entre ces sections pourront être conçues pour permettre cette rotation, tout en assurant le centrage et le guidage des extrémités de celles-ci. Des raccords entre ces sections pourront notamment être conçus pour être désaccouplés de ces extrémités avant le relevage des mangeoires et ré-accouplées après que les mangeoires auront été replacées en position d'utilisation, les raccords continuant de centrer et de guider les extrémités des sections de tubes convoyeurs.

Dans une variante de l'invention, lesdits tubes convoyeurs sont équipés en outre d'obturateurs. De tels obturateurs permettent d'obturer l'orifice par lequel les mangeoires sont alimentées en nourriture. De plus, ces obturateurs permettent, lorsqu'ils ne servent pas à bloquer l'orifice, à empêcher la rotation des mangeoires lorsqu'elles se trouvent en position relevée.

### 5. Liste des figures

L'invention, ainsi que les différents avantages qu'elle présente, seront plus facilement compris, grâce à la description qui va suivre de deux modes non limitatifs de réalisation de celle-ci donnés en référence aux dessins dans lesquels :
- la figure 1 est une vue générale d'une ligne d'alimentation d'une installation pour l'alimentation de volailles équipant un bâtiment d'élevage convenant à la mise en oeuvre de l'invention;
- la figure 2 est une vue en perspective d'une partie de la ligne d'alimentation représentée à la figure 1 sur laquelle les moyens formant levier sont mis en oeuvre;
- la figure 3 est une vue en coupe transversale longitudinale d'un détail de la figure 1 montrant le raccordement de deux portions du tube convoyeur de la ligne d'alimentation représentée sur celle-ci avec des encoches en demi-lune aux extrémités;
- la figure 4 est une vue en perspective des différents éléments constituant le raccordement de deux portions du tube convoyeur de la ligne d'alimentation représenté à la figure 3 avec des encoches en demi-lune aux extrémités ;
- la figure 5 est, selon un second mode de réalisation, une vue en perspective des différents éléments constituant le raccordement de deux portions du tube convoyeur de la ligne d'alimentation de l'invention;
- la figure 6 est, selon un autre mode de réalisation, une vue en perspective des différents éléments constituant le raccordement de deux portions du tube convoyeur de la ligne d'alimentation de l'invention;
- la figure 7 est, selon un autre mode de réalisation, une vue en perspective des différents éléments constituant le raccordement de deux portions de tube convoyeur de la ligne d'alimentation de l'invention s'emboitant l'une dans l'autre;
- la figure 8a et 8b présente une vue de face et de profil d'un obturateur selon l'invention.

### 6. Description de modes de réalisation de l'invention

La présente invention propose de rigidifier la jonction entre deux portions de tubes adjacentes, de manière à bloquer tout mouvement relatif entre les différentes portions de tube. Ainsi, il n'est plus possible pour les différentes portions portant les mangeoires de tourner les unes par rapport aux autres, sous l'effet des coups de becs, des mouvements des volailles ou de la gravité lorsque les mangeoires sont en position de nettoyage.

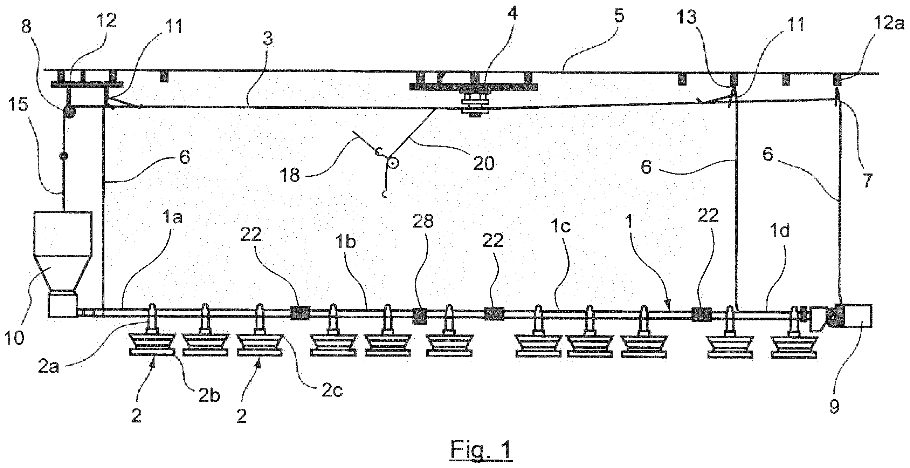

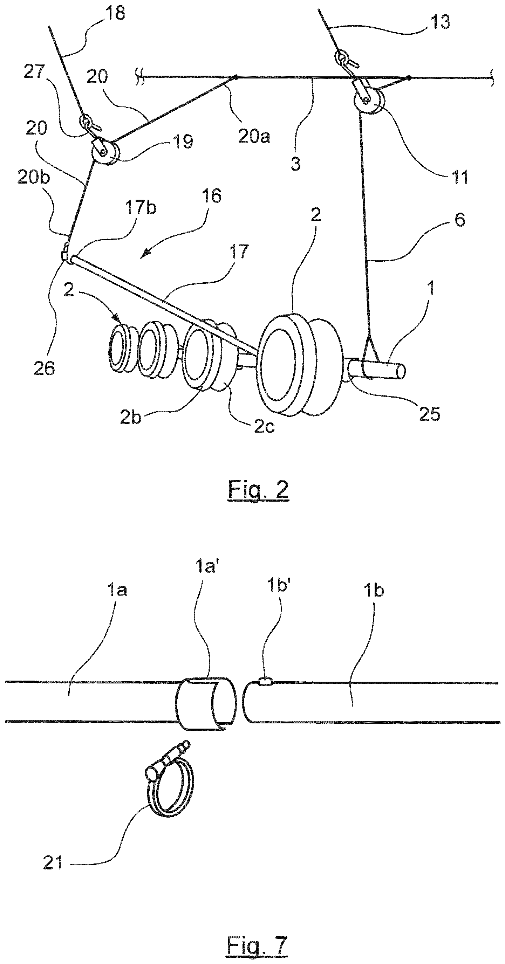

L'installation selon l'invention est représentée en référence aux figures 1 et 2.

En référence à la figure 1, l'installation d'alimentation de volailles représentée comprend une ligne d'alimentation incluant un tube convoyeur 1 sur lequel est fixée une pluralité de mangeoires 2. Ce tube convoyeur 1 et les mangeoires 2 associées sont relevables grâce à un système de câblerie incluant un câble principal 3 qui peut être actionné par un treuil 4 fixé au plafond 5 du bâtiment d'élevage. Les mangeoires 2 présentent chacune une assiette 2b surmontée d'une réserve d'aliment 2c et d'un tube 2a.

Le tube convoyeur d'aliment 1 est relié à l'une de ses extrémités à une trémie 10 dans laquelle est stocké de l'aliment pour volaille. A l'extrémité opposée de ce tube convoyeur 1 un moteur 9 est prévu pour faire tourner, à la demande, une vis sans fin (non représentée) présente à l'intérieur du tube permettant d'extraire de la trémie 10 de l'aliment pour volailles et de le distribuer dans les mangeoires 2. A cet effet, ce tube convoyeur 1 est pourvu d'orifices (non représentés) permettant de déverser les quantités d'aliments apportés par la vis sans fin dans les assiettes 2b des mangeoires via le tube 2a de celles-ci. Le câble principal 3 est relié, par l'intermédiaire de poulies principales 7 et 8, d'une part à l'extrémité du tube convoyeur 1, au niveau de laquelle est prévue le moteur 9, et d'autre part à une chaînette 15 supportant la trémie 10 prévue à l'autre extrémité du tube convoyeur 1. La poulie principale 8 est suspendue à un support 12 solidement arrimé au plafond 5 de l'élevage, tandis que la poulie principale 7 est reliée également à un support 12a arrimé à ce même plafond. Des câbles de suspension 6 relient par ailleurs ce tube convoyeur 1 au câble principal 3 par l'intermédiaire de poulies de renvoi 11. Pour les besoins de clarté de la description, seuls trois câbles de suspension 6 ont été représentés. Toutefois, ces câbles de suspension sont répartis de façon sensiblement uniforme tout le long de la ligne d'alimentation. Les poulies 7, 8, 11 sont fixées au plafond 5 du bâtiment d'élevage par l'intermédiaire de câblots 13.

Le tube convoyeur 1 et les mangeoires associées 2 de la ligne d'alimentation de l'installation représentée à la figure 1 peuvent être relevés en actionnant le treuil 4. Celui-ci permet l'enroulement et le déroulement du câble principal 3. Plus précisément, en actionnant le treuil 4 de façon tel qu'il provoque l'enroulement du câble principal 3, cet enroulement provoque la montée vers le plafond du tube convoyeur 1 et des mangeoires 2 ainsi que la montée de la trémie 10 et du moteur 9 prévus aux extrémités du tube convoyeur 1.

Inversement, l'actionnement du treuil 4 de façon à dérouler le câble principal 3, permet l'abaissement du tube convoyeur 1 et des mangeoires 2 ainsi que celui de la trémie 10 et du moteur 9.

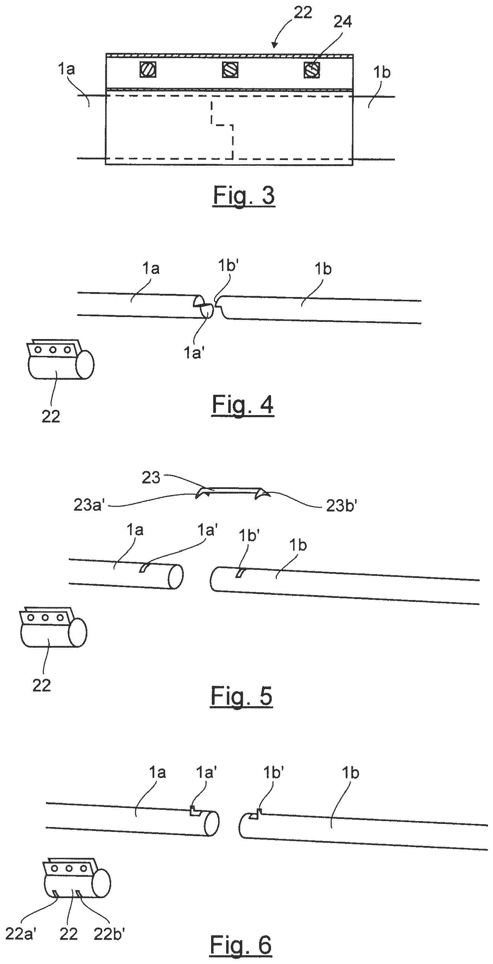

D'une façon classique, le tube convoyeur 1 est constitué de plusieurs portions de tube 1a, 1b, 1c et 1d en acier galvanisé. Ces différentes portions de tubes présentent le même diamètre et sont raccordées entre elles grâce à des raccords tubulaires 22 qui seront décrits ci-après plus en détails en référence aux figures 3 à 8.

Un ensemble formant levier, qui sera quant à lui décrit plus en détails en référence à la figure 2, équipe par ailleurs l'installation représentée à la figure 1. Cet ensemble formant levier comprend :
- une prise de levier 28 solidarisée fixement au tube convoyeur 1,
- un câble de liaison 20 relié au câble principal 3,
- et un bras de levier (non représenté sur la figure 1).

Cet ensemble formant levier 16, comprend une prise de levier 28 solidarisée fixement à une portion 1b du tube convoyeur. Cet ensemble comprend par ailleurs un bras de levier 17 dont une des extrémités est destinée à être fixée à la prise de levier 28. En référence à la figure 2, l'autre extrémité 17b du bras de levier est destinée à être solidarisée par l'intermédiaire d'un crochet 26 à une extrémité 20b d'un câble de liaison 20 relié par l'autre de ses extrémités 20a au câble principal 3 de la ligne d'alimentation par l'intermédiaire d'une poulie 19. Cette poulie 19 est reliée par l'intermédiaire d'un crochet 27 à un câblot 18 fixé au plafond du bâtiment d'élevage.

Le tube convoyeur tourne sur lui-même grâce à l'ensemble formant levier 16 pour placer concomitamment l'ensemble des mangeoires 2 en position de nettoyage telle que représentée à la figure 2. Pour ce faire, une des extrémités du bras de levier 17 est d'abord introduite par un opérateur dans la prise de levier 28. L'opérateur actionne ensuite le bras de levier en exerçant une force vers le haut sur l'autre extrémité 17b du bras de levier 17. Cette force entraîne en rotation le tube convoyeur 1 et l'ensemble des mangeoires grâce aux butées 25 et est exercée jusqu'à ce que les mangeoires se retrouvent en position de nettoyage selon laquelle leur assiette 2b est essentiellement perpendiculaire au sol, correspondant à un positionnement du bras selon un angle d'environ +30 degrés par rapport à l'horizontale. L'opérateur, fixe alors l'extrémité 17b du bras de levier à l'extrémité 20b du câble de liaison 20 grâce au crochet 26. Dans la position de nettoyage ainsi adoptée (voir figure 2), les assiettes 2b et les réserves d'aliments 2c des mangeoires peuvent être aisément nettoyées par un opérateur grâce à l'utilisation d'un jet d'eau.

Le câble 20 étant relié au câble principal 3, il est possible d'agir sur le bras de levier 17 quelle que soit la hauteur du tube convoyeur dans l'installation.

De plus, le bras de levier n'étant pas trop redressé lorsque les mangeoires sont mises en position de nettoyage, il est possible d'utiliser l'ensemble formant levier même dans les bâtiments d'élevage bas de plafond. En pratique on recherchera préférentiellement une inclinaison du bras de levier en position de nettoyage des mangeoires inférieure à + 45 ° par rapport à l'horizontale.

Le bras de levier peut être télescopique, grâce à l'emboîtement de barres pouvant être déployées à leur extrémité.

En référence aux figures 3 à 6, chaque raccord tubulaire 22 est constitué d'un tube réalisé par enroulement d'un feuillard en acier inoxydable, et pourvu de moyens de serrage 24 permettant de serrer ce raccord tubulaire sur les extrémités de deux portions de tube 1a et 1b du tube convoyeur. Les moyens de serrage en question sont, dans ce présent mode de réalisation, constitués par des boulons.

Dans le mode de réalisation représenté à la figure 3, chaque extrémité de portion de tube 1a et 1b est pourvue d'une encoche anti-rotation. De telles encoches ont la forme de demi-lune (1a', 1b'), en relief, tel que cela est représenté aux figures 3 et 4. La partie en relief de chacune des encoches s'emboite avec celle lui faisant face, comme cela est représenté aux figures 2 et 3. Le raccord tubulaire 22 est ensuite positionné sur la jonction entre deux portions de tube 1a et 1b du tube convoyeur 1, peut être serré sur cette jonction en actionnant les boulons des moyens de serrage 24.

Un second mode de réalisation des moyens anti-rotation selon l'invention est représenté à la figure 5. Selon ce mode de réalisation, chaque portion de tube 1a, 1b est pourvue d'une fente 1a', 1b' à ses extrémités.. Un élément 23, pourvu d'ergots 23 a', 23 b' destinés à être assemblés avec les fentes, permet de joindre les portions de tubes 1a et 1b bout à bout et de les maintenir fermement maintenues. De préférence, les fentes et les ergots devront être dimensionnés l'un par rapport à l'autre de sorte que les portions de tubes ne puissent bénéficier d'un quelconque degré de liberté pour pouvoir tourner. Un raccord 22 tel que décrit précédemment permettra d'apporter un second degré de maintien à l'ensemble.

Un troisième mode de réalisation est représenté à la figure 6. Selon cette variante de l'invention, des ergots anti-rotation 1a' et 1b' sont positionnés à la surface de chacune des parois de tube 1a et 1b. Ces ergots permettent de coopérer avec des fentes 22a' et 22b' prévues sur le raccord tubulaire 22. Ce mode de réalisation permet d'une part de raccorder les portions de tube et de les maintenir assemblées, et d'autre part d'empêcher tout mouvement relatif de ces portions de tubes l'une par rapport à l'autre.

Selon la figure 7, les portions de tube constituant le tube convoyeur 1 pourront, au lieu de présenter le même diamètre sur toute leur longueur, présenter des extrémités mâle et femelle autorisant l'emboîtement de ces extrémités l'une dans l'autre. Selon un tel mode de réalisation, l'extrémité mâle de la portion de tube 1a est pourvue d'au moins une fente 1a' pour recevoir au moins un ergot 1b' prévu à l'extrémité femelle de la portion de tube 1b lors de l'emboitement. Un collier de serrage 21 pourra être utilisé pour sécuriser la jonction des deux portions de tube. L'ergot 1b' introduit dans la fente 1a', permettra de minimiser les risques de rotation des portions du tube convoyeur les unes par rapport aux autres.

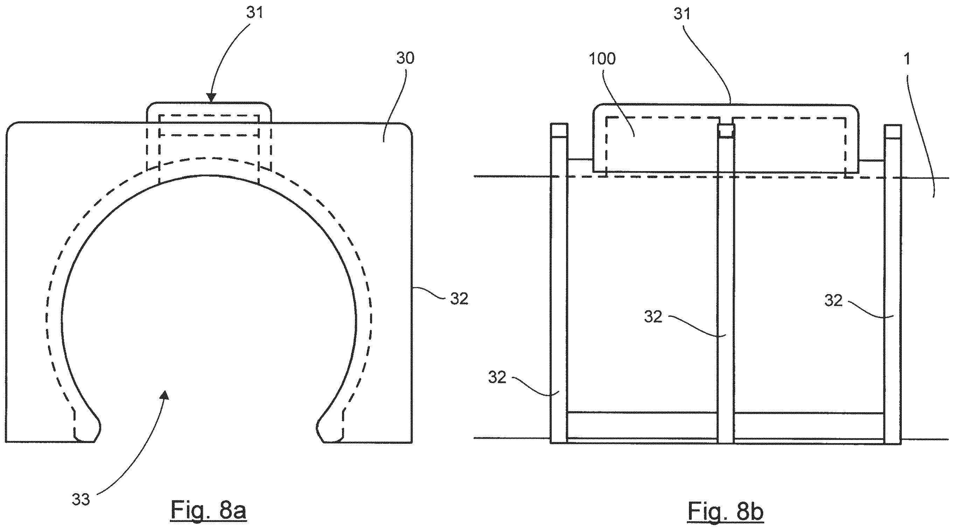

On présente en relation avec les figures 8a et 8b un obturateur 30 destiné à être placé au niveau d'un orifice d'alimentation d'un tube convoyeur 1. L'obturateur 30 comprend une lumière 33 dans laquelle le tube convoyeur 1 doit passer. Plus précisément, et tel qu'on peut l'observer à la figure 8a, l'obturateur 30 possède une forme extérieure généralement parallélépipédique et des nervures 32 permettant de renforcer la structure de l'obturateur 30. L'obturateur comprend également un compartiment 31 destiné à être placé sur un rebord faisant saillie entourant l'orifice 100 du tube convoyeur par lequel les aliments sont déversés dans les mangeoires. L'obturateur peut également présenter d'autres formes extérieures. De préférence, l'obturateur est réalisé en un matériau tel que le plastique ou un polymère.

Lorsque les mangeoires sont en position verticale, les orifices des tubes convoyeurs peuvent alimenter les mangeoires. Et lorsque le tube convoyeur est mis en rotation, les rebords faisant saillie entrent en contact avec l'obturateur qui permet la mise en position inclinée des mangeoires.

L'obturateur se place sur le tube convoyeur en le faisant coopérer à force. Lorsque l'orifice alimente une mangeoire, l'obturateur est placé de manière à ne pas clore l'orifice. En ce cas, lorsque les mangeoires sont en position relevées, l'obturateur permet également de bloquer la rotation de la mangeoire. Autrement dit, l'obturateur forme une cale contre laquelle l'axe de la mangeoire bute, bloquant la rotation initiée par la gravité.

Lorsque l'orifice n'alimente aucune mangeoire, l'obturateur est placé de manière à clore l'orifice et à ce que le compartiment 31 loge les rebords faisant saillie entourant l'orifice d'alimentation.

## Revendications

1. Installation pour l'alimentation de volailles destinée à équiper un bâtiment d'élevage incluant au moins une ligne d'alimentation relevable grâce à un treuil (4) actionnant un câble principal (3) auquel ladite ligne d'alimentation est reliée, ladite ligne d'alimentation comprenant une pluralité de mangeoires (2) fixées à un tube convoyeur d'aliment (1) et des moyens de distribution (9,10) dudit aliment dans lesdites mangeoires (2), lesdites mangeoires comprenant chacune une assiette (2b) surmontée d'une réserve d'aliments (2c) et d'un tube (2a) dont l'extrémité supérieure coopère avec le tube convoyeur (1), ledit tube convoyeur d'aliment (1) étant relié audit câble principal (3) par des câbles de suspension (6) et étant composé d'une pluralité de portions de tube (1a,1b,1c,1d) reliées les unes aux autres, ladite installation étant de plus pourvue de moyens permettant la mise en rotation sur lui même dudit tube convoyeur, ou d'une section de celui-ci, de façon à organiser le pivotement desdites mangeoires (2), lesdits moyens de mise en rotation comprenant au moins un ensemble formant levier (16) incluant une barre de levier (17) dont une extrémité (17a) est destinée à coopérer avec une prise de levier (28) fixée audit tube convoyeur (1), **caractérisée en ce que** ladite installation comprend un câble de liaison (20) relié à l'une de ses extrémités (20a) au câble principal (3) et destiné à être relié par l'autre de ses extrémités (20b) à l'autre extrémité (17b) dudit bras de levier (17), ledit câble de liaison (20) étant indépendant des câbles de suspension (6) du tube convoyeur (1), et **en ce que** des encoches métalliques anti-rotation (1a', 1b') sont prévues au niveau des jonctions entre lesdites portions de tubes (1a, 1b, 1c, 1d).

2. Installation selon la revendication 1 dans laquelle le levier (16) est télescopique.

3. Installation selon l'une des revendications précédentes **caractérisée en ce que** lesdites encoches anti-rotation métalliques (1a', 1b') sont constituées en un matériau choisi dans le groupe constitué par l'aluminium, en acier inoxydable et l'acier galvanisé.

4. Installation selon l'une quelconque des revendications précédentes **caractérisée en ce que** lesdites portions de tube (1a, 1b, 1c, 1d) dudit tube convoyeur (1) sont de même diamètre et reliées entre elles par des raccords tubulaires métalliques (22) équipés de ladite encoche anti-rotation (1a', 1b').

5. Installation selon l'une quelconque des revendications précédentes dans laquelle lesdites encoches métalliques anti-rotation (1a', 1b') sont prévues à l'extrémité de chacune des portions de tube (1a, 1b, 1c, 1d).

6. Installation selon l'une quelconque des revendications précédentes dans laquelle lesdits tubes (1) convoyeurs sont équipés en outre d'obturateurs (30).

7. Installation selon l'une quelconque des revendications précédentes dans laquelle chacune desdites encoches anti-rotation (1a', 1b') présentent une forme de demi-lune de sorte qu'elles s'emboitent l'une dans l'autre.

8. Installation selon l'une quelconque des revendications 1 à 6 dans laquelle lesdites encoches anti-rotation sont des encoches femelles (1a', 1b') reliées entre elles par des raccords tubulaires (22) métalliques et des encoches mâles (23a', 23b').

9. Installation selon l'une quelconque des revendications 1 à 6 dans laquelle lesdites encoches sont des encoches mâles (1a', 1b'), reliées entre elles par des raccords tubulaires (22) métalliques équipés d'encoches femelles (22a', 22b').

10. Installation selon l'une quelconque des revendications 1 à 6 dans laquelle une première portion (1a) de tube convoyeur 1 comprend une encoche femelle (1a') dans laquelle s'emboite une encoche male (1b') prévue sur une seconde portion de tube(1b).

## Patentansprüche

1. Anlage zum Füttern von Geflügel, die zur Ausstattung eines Stalls bestimmt ist, einschließlich mindestens einer Zufuhrleitung, die dank einer Winde (4) hochklappbar ist, die ein Hauptseil (3) betätigt, mit dem die Zufuhrleitung verbunden ist, wobei die Zufuhrleitung eine Vielzahl von Futtertrögen (2), die an einem Futterförderrohr (1) befestigt sind, und Mittel (9, 10) zum Verteilen des Futters in die Futtertröge (2) umfasst, wobei die Futtertröge jeweils einen Teller (2b) umfassen, über dem ein Futtervorrat (2c) und ein Rohr (2a) montiert sind, dessen oberes Ende mit dem Förderrohr (1) zusammenwirkt, wobei das Futterförderrohr (1) über Aufhängeseile (6) mit dem Hauptseil (3) verbunden ist und aus einer Vielzahl von miteinander verbundenen Rohrabschnitten (1a, 1b, 1c, 1d) besteht, wobei die Anlage ferner mit Mitteln versehen ist, mittels derer der Rohrförderer oder ein Abschnitt davon um sich selbst in Drehung versetzt werden kann, um das Schwenken der Futtertröge (2) zu veranlassen, wobei die Drehungsmittel mindestens eine einen Hebel (16) bildende Baugruppe umfassen, die eine Hebelstange (17) aufweist, deren eines Ende (17a) zum Zusammenwirken mit einer Hebelaufnahme (28) bestimmt ist, die am Förderrohr (1) befestigt ist, **dadurch gekennzeichnet, dass** die Anlage ein Verbindungsseil (20) umfasst, das an einem seiner Enden (20a) mit dem Hauptseil (3) verbunden und dazu bestimmt ist, über das andere seiner Enden (20b) mit dem anderen Ende (17b) des Hebelarms (17) verbunden zu sein, wobei das Verbindungsseil (20) von den Aufhängeseilen (6) des Förderrohrs (1) unabhängig ist, und dass auf Höhe der Verbindungen zwischen den Rohrabschnitten (1a, 1b, 1c, 1d) metallische Drehsicherungskerben (1a', 1b') vorgesehen sind.

2. Anlage nach Anspruch 1, wobei der Hebel (16) teleskopisch ist.

3. Anlage nach einem der vorhergehenden Ansprüche, **dadurch gekennzeichnet, dass** die metallischen Drehsicherungskerben (1a', 1b') aus einem Material bestehen, das aus der aus Aluminium, rostfreiem Stahl und verzinktem Stahl bestehenden Gruppe ausgewählt ist.

4. Anlage nach einem der vorhergehenden Ansprüche, **dadurch gekennzeichnet, dass** die Rohrabschnitte (1a, 1b, 1c, 1d) des Förderrohrs (1) den gleichen Durchmesser haben und untereinander über rohrförmige metallische Anschlussstücke (22) verbunden sind, die mit der Drehsicherungskerbe (1a', 1b') ausgestattet sind.

5. Anlage nach einem der vorhergehenden Ansprüche, wobei die metallischen Drehsicherungskerben (1a', 1b') am Ende jedes Rohrabschnitts (1a, 1b, 1c, 1d) vorgesehen sind.

6. Anlage nach einem der vorhergehenden Ansprüche, wobei die Förderrohre (1) ferner mit Verschlüsse (30) ausgestattet sind.

7. Anlage nach einem der vorhergehenden Ansprüche, wobei jede der Drehsicherungskerben (1a', 1b') halbmondförmig ist, so dass sie ineinander einsteckbar sind.

8. Anlage nach einem der Ansprüche 1 bis 6, wobei die Drehsicherungskerben (1a', 1b') weibliche Kerben (1a', 1b') sind, die durch rohrförmige metallische Anschlussstücke (22) und männliche Kerben (23a', 23b') miteinander verbunden sind.

9. Anlage nach einem der Ansprüche 1 bis 6, wobei die Kerben männliche Kerben (1a', 1b') sind, die durch rohrförmige metallische Anschlussstücke (22), die mit weiblichen Kerben (22a', 22b') ausgestattet sind, miteinander verbunden sind.

10. Anlage nach einem der Ansprüche 1 bis 6, wobei ein erster Abschnitt (1a) des Förderrohrs (1) eine weibliche Kerbe (1a') umfasst, in die sich an einem zweiten Rohrabschnitt (1 b) vorgesehene männliche Kerbe (1b') einfügt.

## Claims

1. Poultry feeding installation intended for equipping a rearing house, including at least one feeding line which can be raised by means of a winch (4) setting in motion a main cable (3) to which the said feeding line is connected, the said feeding line comprising a plurality of feeders (2) fastened to a feed conveyor tube (1) and means (9, 10) of distributing the said feed to the said feeders (2), the said feeders each comprising a plate (2b) surmounted by a feed pan (2c) and by a tube (2a), the upper end of which co-operates with the conveyor tube (1), the said feed conveyor tube (1) being connected to the said main cable (3) by suspension cables (6) and consisting of a plurality of portions of tube (1a, 1b, 1c, 1d) connected to one another, the said installation also being provided with means whereby the said conveyor tube or a section of this can be rotated on itself so as to arrange the pivoting of the said feeders (2), the said means of rotating comprising at least one assembly forming a lever (16) including a lever bar (17), one end (17a) of which is intended to co-operate with a lever attachment point (28) fastened to the said conveyor tube (1), **characterised in that** the said installation comprises a linking cable (20) connected, at one of its ends (20a) to the main cable (3) and intended to be connected via its other end (20b) to the other end (17b) of the said lever arm (17), the said linking cable (20) being independent of the suspension cables (6) of the conveyor tube (1) and **in that** metal anti-rotation catches (1a', 1b') are provided at the joints between the said portions of tube (1a, 1b, 1c, 1d).

2. Installation according to claim 1, in which the lever (16) is telescopic.

3. Installation according to either of the foregoing claims, **characterised in that** the said metal anti-rotation catches (1a, 1b') are formed in a material chosen from the group consisting of aluminium, stainless steel and galvanised steel.

4. Installation according to any of the foregoing claims, **characterised in that** the said portions of tube (1a, 1b, 1c, 1d) of the said conveyor tube (1) are of the same diameter and joined to one another by tubular metal connections (22) equipped with the said anti-rotation catch (1a', 1b').

5. Installation according to any of the foregoing claims, in which the said metal anti-rotation catches (1a', 1b') are provided at the end of each of the portions of tube (1a, 1b, 1c, 1d).

6. Installation according to any of the foregoing claims, in which the said conveyor tubes (1) are also equipped with plugs (30).

7. Installation according to any of the foregoing claims, in which each of the said anti-rotation catches (1a, 1b') is of a half-moon shape so that they fit into each other.

8. Installation according to any of claims 1 to 6, in which the said anti-rotation catches are female catches (1a', 1b') joined together by tubular metal connections (22) and male catches (23a', 23b').

9. Installation according to any of claims 1 to 6, in which the said catches are male catches (1a', 1b') joined together by tubular metal connections (22) equipped with female catches (22a', 22b').

10. Installation according to any of claims 1 to 6, in which a first portion (1a) of conveyor tube 1 comprises a female catch (1a') into which a male catch (1b'), provided on a second portion of tube (1b), fits.
